(19) Europäisches Patentamt
European Patent Office
Office européen des brevets

(11) **EP 2 386 774 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(51) Int Cl.:
***F16D 48/06*** *(2006.01)*

(21) Anmeldenummer: **11164784.8**

(22) Anmeldetag: **04.05.2011**

(54) **Verfahren zur Ansteuerung einer Reibkupplung**

Method for operating a friction clutch

Procédé de commande d'un embrayage à friction

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2010 DE 102010021000**

(43) Veröffentlichungstag der Anmeldung:
**16.11.2011 Patentblatt 2011/46**

(73) Patentinhaber: **GETRAG Getriebe- und Zahnradfabrik Hermann Hagenmeyer GmbH & Cie KG 74199 Untergruppenbach (DE)**

(72) Erfinder:
• **Gorius, Thomas 70567 Stuttgart (DE)**
• **Meissner, Jörg 74626 Bretzfeld (DE)**

(74) Vertreter: **Witte, Weller & Partner Postfach 10 54 62 70047 Stuttgart (DE)**

(56) Entgegenhaltungen:
DE-A1-102008 009 094    DE-C1- 10 046 106
US-A1- 2003 230 461    US-B1- 6 341 552

• J HORN: "Flatness-based clutch control for automated manual transmissions", CONTROL ENGINEERING PRACTICE, Bd. 11, Nr. 12, 1. Dezember 2003 (2003-12-01), Seiten 1353-1359, XP55008137, ISSN: 0967-0661, DOI: 10.1016/S0967-0661(03)00099-6

**Beschreibung**

Die vorliegende Erfindung betrifft ein Verfahren zur Ansteuerung einer Reibkupplung, insbesondere für einen Fahrzeugantriebsstrang.

In Kraftfahrzeugantriebssträngen werden Reibkupplungen häufig als Trennkupplungen zwischen einer Antriebseinheit und einem Getriebe wie einem Stufengetriebe verwendet. Die vorliegende Erfindung betrifft insbesondere diese Art von Reibkupplungen, kann jedoch auch Reibkupplungen wie Synchronkupplungen in einem Getriebe betreffen.

Die fortschreitende Automatisierung von Kraftfahrzeugantriebssträngen und die gestiegenen Anforderungen an schnelle Gangwechsel einerseits und hohen Komfort andererseits bedürfen ausgeklügelter Ansteuerungsverfahren.

Dabei ist zu berücksichtigen, dass derartige Reibkupplungen häufig in ein Getriebegehäuse integriert sind und es folglich schwierig ist, bestimmte Zustände der Reibkupplung zu messen.

Aus dem Dokument DE 108 009 094 B4 ist ein Verfahren zum Ansteuern einer Kupplung bekannt, wobei anstelle eines Kupplungsdruckes ein Leitungsdruck an einem Messort gemessen wird, der über eine Übertragungsstrecke mit dem hydraulischen Aktor zur Betätigung der Reibkupplung verbunden ist, wobei die Übertragungsstrecke einen hydraulischen Widerstand beinhaltet. Um die Ansteuerung der Reibkupplung zu verbessern, wird in diesem Dokument vorgeschlagen, das gemessene Ist-Signal durch ein Übertragungsglied mit Verzögerungseigenschaften laufen zu lassen, bevor es einem Regler zugeleitet wird.

Bei dieser Art von Ansteuerverfahren ist es folglich nicht notwendig, den Druck in einem hydraulischen Aktor zu messen.

Ferner ist die Kupplungsposition, die der Position eines hydraulischen Aktors gleichgesetzt werden kann, regelungstechnisch von besonderer Bedeutung. Denn bei Reibkupplungen der eingangs genannten Art basieren übergeordnete Regelungsstrategien häufig auf dem so genannten Eingriffspunkt bzw. Kisspoint, der einer Position der Kupplung bzw. des Aktors entspricht, bei dem die Reibkupplung "zu greifen" beginnt. Der Eingriffspunkt entspricht dabei häufig einem Zustand, bei dem die Reibkupplung ein bestimmtes, sehr geringes Moment übertragen kann.

Auch die Kupplungsposition bzw. die Aktorposition sind jedoch schwer zu messende Größen.

In dem Dokument "Flatness-based clutch control for automated manual transmissions", 1 Horn, Control Engineering Practice, Bd. 11, Nr. 12, 1. Dezember 2003, Seiten 1353-1359, ist eine Anordnung für eine elektrohydraulische Steuerung einer Kupplungsposition beschrieben. Die Anordnung umfasst im Wesentlichen einen hydraulischen Zylinder und ein elektrisch steuerbares Ventil, das über eine hydraulische Leitung mit dem Zylinder verbunden ist. Somit wird der Druck innerhalb des hydraulischen Zylinders mittels des Ventils eingestellt. Basierend auf dem Ansatz der flachen Systeme wird von dieser hydraulischen Anordnung ein regelungstechnisches Modell gebildet, das die Kupplungsposition als flachen Ausgang aufweist, und das invertierbar ist. Somit kann durch Vorgabe einer Soll-Kupplungsposition eine Vorsteuerung implementiert werden. Da diese Vorsteuerung jedoch instabil ist, wird die Vorsteuerung um eine Rückkopplungsregelung ergänzt, die eine aktuell gemessene Kupplungsposition berücksichtigt

Aus dem Dokument DE 100 46 106 C1 ist ein Verfahren zum Regeln einer automatischen Kraftfahrzeugkupplung bekannt, bei dem die Kupplungsposition gemessen wird und aus einem Sollwert und dem gemessenen Istwert der Kupplungsposition eine Regelabweichung ermittelt und daraus ein Regelsignal berechnet wird. Zur Ansteuerung eines hydraulischen Aktors wird in diesem Dokument eine elektrisch ansteuerbare Fluidquelle verwendet, die ein elektromagnetisch betätigtes Ventil aufweist, mit dessen Spulenstrom ein Volumenstrom von Hydraulikflüssigkeit gesteuert wird, wobei der Volumenstrom in dem hydraulischen Aktor einen Druck aufbaut und damit die Position der Kupplung festlegt. Zur Kompensation von Nichtlinearitäten der Regelstrecke wird ein regeltechnisches Modell der durch das Ventil, den Aktor und die Kupplung gebildeten Regelstrecke erstellt. Von diesem Modell wird ein inverses Streckenmodell abgeleitet. Mit einem Gleitregelalgorithmus wird der Volumenstrom berechnet. Dieser Volumenstrom wird in das inverse Streckenmodell eingesetzt und damit der Ventilspulenstrom berechnet, der nötig ist, um den Ölvolumenstrom zu erzeugen.

Ein ähnliches Verfahren, bei dem aus einer Soll-Position und einer Ist-Position ein Ölvolumenstrom berechnet wird und zusätzlich aus der Soll-Position von einer Vorsteuerung ein weiterer Ölvolumenstrom berechnet und als Ausgangssignal der Vorsteuerung ausgegeben wird, ist aus dem Dokument DE 101 37 581 C1 bekannt.

In den drei letztgenannten Dokumenten wird jedoch nach wie vor davon ausgegangen, dass die Ist-Position der Kupplung bzw. eine Ist-Position des Aktors gemessen und in herkömmlicher Weise zur Bildung einer Regelabweichung herangezogen wird.

Die vorliegende Erfindung hat sich zur Aufgabe gestellt, ein Ansteuerungsverfahren für eine Reibkupplung zu entwerfen, bei dem ein Aktor-Istwert wie eine Aktor- bzw. Kupplungsposition nicht gemessen werden muss.

Die obige Aufgabe wird gelöst durch ein Verfahren zur Ansteuerung einer Reibkupplung, insbesondere für einen Kraftfahrzeugantriebsstrang, wobei die Reibkupplung mit einem Kupplungsdruck beaufschlagt wird, der von einer hydraulischen Aktuatoranordnung erzeugt wird, die eine elektrisch ansteuerbare Fluidquelle und einen hydraulischen Aktor aufweist, dessen Zustand durch einen Aktor-Istwert charakterisiert ist, der mit dem Kupplungsdruck in Zusammenhang steht, wobei das Verfahren die Schritte aufweist:

- Bilden eines regelungstechnischen Modells der Aktuatoranordnung, das zumindest eine Fluidquellen-Stellgröße als Eingang und zumindest den Aktor-Istwert als flachen Ausgang aufweist und das invertierbar ist;

- Bilden eines inversen Modells der Aktuatoranordnung;

- Eingeben eines Aktor-Sollwertes in das inverse Modell, um eine Modell-Stellgröße zu ermitteln; Verwenden von zumindest einem Teil des inversen Modells, um aus dem Aktor-Sollwert die Modell-Stellgröße oder eine damit gekoppelte Koppelgröße der Fluidquelle zu ermitteln und einem ersten Regler einzugeben, der hieraus und aus einer entsprechenden gemessenen Istgröße eine erste Fluidquellen-Stellgröße erzeugt und Verwenden von zumindest einem Teil des inversen Modells, um aus dem Aktor-Sollwert einen Modell-Kupplungsdruck zu ermitteln und einem zweiten Regler einzugeben, der hieraus und aus einer entsprechenden gemessenen Druck-Istgröße eine zweite Fluidquellen-Stellgröße erzeugt; und

- Aufsummieren der Modell-Stellgröße, der ersten Fluidquellen-Stellgröße und/oder der zweiten Fluidquellen-Stellgröße zu einem Gesamtstellwert, der zur Ansteuerung der Fluidquelle verwendet wird.

Der Grundgedanke der Erfindung besteht folglich darin, ein solches regelungstechnisches Modell zu entwickeln, das eine Fluidquellen-Stellgröße als Eingang und den Aktor-Istwert als flachen Ausgang aufweist, so dass ein Aktor-Sollwert in das inverse Modell eingegeben werden kann, um hieraus eine Modell-Stellgröße zu berechnen, die zur Ansteuerung der Fluidquelle geeignet ist.

Des Weiteren wird zumindest ein Teil des inversen Modells verwendet, um die Modell-Stellgröße, eine damit gekoppelte Koppelgröße und/oder den Modell-Kupplungsdruck zu ermitteln. Die entsprechenden Istgrößen werden gemessen und zur Feedback-Regelung verwendet, so dass eine Stabilisierung erfolgt. Modellfehler können somit ausgeregelt werden. Besonders bevorzugt ist eine gemessene Istgröße dabei die Drehzahl des eine Pumpe antreibenden elektrischen Motors, da sich eine derartige Drehzahl auf einfache Weise und präzise ermitteln lässt. Entsprechend hierzu wird aus dem Teil des inversen Modells vorzugsweise eine Modell-Drehzahl eines solchen elektrischen Motors ermittelt.

Auf diese Weise wird der Sollzustand der Drehzahl des elektrischen Motors rückkopplungsgeregelt.

Die erste und die zweite Fluidquellen-Stellgröße werden dann bevorzugt mit der als Vorsteuerung dienenden, aus dem inversen Modell abgeleiteten Modell-Stellgröße zur Ansteuerung der Fluidquelle verwendet, indem die Stellgröße und die Modell-Stellgröße addiert werden.

Demzufolge ist bspw. das Messen einer Aktorposition nicht notwendig. Die Aufgabe wird somit vollkommen gelöst.

Gemäß einer bevorzugten Ausführungsform ist demgemäß der Aktor-Istwert eine Aktor-Istposition, und der Aktor-Sollwert ist eine Aktor-Sollposition.

Ferner ist es bevorzugt, wenn die sich aus dem inversen Modell ergebende Modell-Stellgröße zur Vorsteuerung verwendet wird.

Hierdurch kann der von einem zugeordneten Regler zu verarbeitende Regelungshub verringert werden.

Insgesamt ist es ferner vorteilhaft, wenn die elektrisch ansteuerbare Fluidquelle eine mittels eines elektrischen Motors gesteuerte Pumpe ist, deren Fluidquellen-Stellgröße der Motorstrom ist.

Es hat sich gezeigt, dass eine derartige Fluidquelle zum einen die erforderlichen zeitlichen Verläufe des dem hydraulischen Aktor zuzuführenden Volumenstroms abdecken kann. Zum anderen kann der Zustand einer solchen, mittels eines elektrischen Motors gesteuerten Pumpe gut modelliert und in das regelungstechnische Modell implementiert werden.

Gemäß einer weiteren bevorzugten Ausführungsform weist die elektrisch ansteuerbare Fluidquelle alternativ oder zusätzlich ein elektrisch gesteuertes Ventil auf, dessen Fluidquellen-Stellgröße der Ventilstrom ist.

Bei dieser Ausführungsform erzeugt eine Pumpe einen relativ konstanten Systemdruck, aus dem das elektrisch gesteuerte Ventil (bspw. ein elektromagnetisch gesteuertes Ventil) dann einen geeigneten Druck und einen geeigneten Volumenstrom erzeugen kann.

Die gemessene Druck-Istgröße kann der Druck in dem hydraulischen Aktor sein.

Besonders bevorzugt ist es jedoch, wenn die gemessene Druck-Istgröße ein Leitungsdruck an einem Messort zwischen der Fluidquelle und einem hydraulischen Widerstand zwischen der Fluidquelle und dem Aktor ist.

Bei dieser Ausführungsform kann eine Druckregelung folglich anhand des gemessenen Drucks erfolgen, der nahe an der Fluidquelle vorherrscht. Demzufolge kann zwischen dem Messort und dem hydraulischen Aktor eine vergleichbar lange hydraulische Leitung liegen, die einen hydraulischen Widerstand bildet. Dies vereinfacht die Anordnung der regelungstechnischen und messtechnischen Komponenten, die zur Ansteuerung der Reibkupplung verwendet werden.

Gemäß einer ersten bevorzugten Ausführungsform ist das regelungstechnische Modell als Modell vierter Ordnung mit vier Zustandsgleichungen realisiert, die auf vier Zustandsgrößen basieren.

Hierdurch kann das Modell die Aktuatoranordnung relativ genau beschreiben. Ferner ist es hierbei möglich, den Aktor-Istwert als flachen Ausgang zu ermitteln, und ein derartiges Modell kann invertierbar ausgestaltet werden.

Besonders bevorzugt ist es dabei, wenn die vier Zustandsgrößen eine Koppelgröße der Fluidquelle (wie bspw. die Drehzahl des elektrischen Motors einer Pumpe), den Kupplungsdruck bzw. den Leitungsdruck, einen Aktorwert und eine Ableitung des Aktorwertes beinhalten.

Mit diesen Zustandsgrößen kann ein regelungstechnisches Modell der Aktuatoranordnung so realisiert werden, dass die Bildung des inversen Modells möglich ist und die Berechnung der Modell-Stellgröße keinen hohen Rechenaufwand erfordert.

Gemäß einer weiteren bevorzugten Ausführungsform ist das regelungstechnische Modell als Modell dritter Ordnung mit drei Zustandsgleichungen realisiert, die auf drei Zustandsgrößen basieren.

Hierdurch kann der Rechenaufwand noch weiter verringert werden.

Besonders bevorzugt ist es dabei, wenn die drei Zustandsgrößen eine Koppelgröße der Fluidquelle (wie die Drehzahl eines elektrischen Motors einer Pumpe), den Kupplungsdruck bzw. Leitungsdruck und einen Aktorwert beinhalten.

Bei dieser Ausführungsform wird das regelungstechnische Modell folglich ohne die Verwendung einer Ableitung der Aktorgeschwindigkeit realisiert. Mit anderen Worten ist bei dieser Ausführungsform eine rechentechnisch aufwändige Integration der Aktorbeschleunigung nicht notwendig.

Besonders bevorzugt ist es dabei, wenn der Aktorwert eine Aktorposition ist.

Wenn bei der bevorzugten Variante die Ableitung der Aktorgeschwindigkei (das heißt, die Aktorbeschleunigung) nicht in das regelungstechnische Modell eingeht, kann das Modell nicht nur zum Füllen der Kupplung, sondern auch zur Ansteuerung der Reibkupplung im regelungstechnischen Lastfall verwendet werden. Mit anderen Worten kann die Ansteuerung über den gesamten Arbeitsbereich der Reibkupplung erfolgen, da die Geschwindigkeit des Aktors nicht als Zustand berücksichtigt wird. Denn beim Überschreiten des Eingriffspunktes (Kisspoints) der Reibkupplung nimmt die Steifigkeit des Systems sehr stark zu, da als Rückstellkraft nicht nur die Rückstellkraft einer Rückstellfeder des Aktors wirkt, sondern auch die interne Reibkupplungskraft (bspw. Lamellenfederkraft). Hierdurch werden die Frequenzen des zu simulierenden Modells für eine Berechnung in einem Getriebesteuergerät zu groß, wenn die Aktorgeschwindigkeit als Systemzustand mit einbezogen würde.

Die eingangs genannten Dokumente DE 100 46 106 C1 und DE 101 37 581 C1 offenbaren Ansteuerungsverfahren, die nur für den Füllvorgang der Kupplung, also bis hin zum Eingriffspunkt, geeignet sind.

Insgesamt betrifft die vorliegende Erfindung einen regelungstechnischen Ansatz zum Vorsteuern bzw. Regeln von Drehzahl, Druck und Position einer Aktuatoranordnung einer Reibkupplung in einem Fahrzeug nach der Theorie der "flachheitsbasierten Folgeregelung".

Das erfindungsgemäße Ansteuerverfahren eignet sich dafür, dass regelungstechnische Modelle verwendet werden, die komplett über alle Arbeitspunkte verwendbar sind und keine zu hohe Rechenleistung beanspruchen. Ferner können die regelungstechnischen Modelle so realisiert werden, dass sie den Vorschriften der Theorie zu den flachen Systemen entsprechen.

Mit anderen Worten löst die vorliegende Erfindung vorzugsweise die Aufgabe, mittels der Theorie der "flachen Systeme" die Position in der Kupplung, den Druck in der Leitung sowie z.B. die Drehzahl eines antreibenden Motors einer Pumpe aufgrund von physikalischen, modellierten Zusammenhängen vorzusteuern und zu regeln. Bevorzugt werden hierbei folglich invertierte Modelle der Regelstrecke benutzt, um anhand einer gewünschten Sollposition der Kupplung den notwendigen Stellstrom zu errechnen. Ferner werden bevorzugt die gewünschten Sollzustände von Kupplungs- bzw. Leitungsdruck und Koppelwert (Drehzahl des Pumpenmotors) anhand der Modellgleichungen mittels vorgegebener Sollverläufe bestimmt und für eine Rückkopplungsregelung zur Stabilisierung bereitgestellt. Die Berechnung der Sollverläufe, die vorzugsweise als Soll-Trajektorien vorgegeben werden, erfolgt dabei vorzugsweise anhand einer normierten Vorgabe, die im Fahrzeug anhand der aktuellen Kupplungsposition und Zeitvorgaben verändert wird. Die normierten Soll-Trajektorien unterliegen dabei Randbedingungen wie bspw. stetiger Differenzierbarkeit, und zwar entsprechend der gewählten Ordnung des regelungstechnischen Modells. In einem weiteren Fall kann die Berechnung der Solltrajektorien auch mittels digitaler Filter erfolgen, wobei die Zeitkonstanten und Initialwerte ebenfalls anhand der aktuellen Kupplungsposition und Zeitvorgaben bestimmt werden.

Insgesamt ist ferner noch Folgendes anzumerken. Das Ansteuerverfahren geht bevorzugt von folgenden weiteren Bedingungen aus. Die hydraulische Leitung zwischen der Fluidquelle und dem Aktor sollte eine hydraulische Leitung mit laminaren Widerständen sein. In der Leitung sollte sich ein kapazitives Verhalten ergeben. Insbesondere sollte das Verhalten in der Leitung nicht induktiv sein. Weiter kann eine Verbindung zu einem Tank über eine Drossel oder eine Blende bestehen, um die Regelbarkeit des Systems zu erhöhen, da sich dann eine geringe Kreisverstärkung bei nur etwas verschlechtertem Wirkungsgrad ergibt.

Bei Start des elektrischen Motors der Pumpe kann eine Kompensation der Haftreibung erfolgen, indem der Fluidquellen-Stellgröße ein DT1-Glied zugeschaltet wird.

Vorzugsweise werden in das inverse Modell Soll-Trajektorien eingegeben, die den Sollwert-Verlauf der Systemzustände beschreiben. Diese entstehen vorzugsweise aus dem Verlauf der Sollposition, wobei dieser Verlauf für ein System vierter Ordnung viermal stetig differenzierbar sein sollte. Ferner sollten die Anfangs-und Endwerte mit repräsentierbar sein. Vorzugsweise erfolgt die Beschreibung der Soll-Trajektorien daher über ein Polynom.

Die Dynamik der Soll-Trajektorien ist so zu wählen, dass die Fluidquellen-Stellgröße innerhalb vorgegebener Beschränkungen liegt, also größer Null ist und eine maximale Fluidgrößen-Stellgröße nicht überschreitet.

Der erste und der zweite Regler zur Ermittlung einer ersten Fluidquellen-Stellgröße und einer zweiten Fluidquellen-Stellgröße sind vorzugsweise als PI-Regler realisiert.

Ferner ist es möglich, die Regelung durch Bereitstellen eines regelungstechnischen Beobachters zu verbessern. Bspw. kann die Koppelgröße (Drehzahl des Pumpenmotors) per nichtlinearem Beobachter dem Regler zur Verfügung gestellt werden.

Insbesondere bei der Ausführungsform mit einem Modell dritter Ordnung liegt ein Vorteil in der Verwendbarkeit über den gesamten Arbeitsbereich, da die entstehenden Frequenzen der Simulation ausreichend klein sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Darstellung eines Kraftfahrzeugantriebsstranges mit einer hydraulischen Aktuatoranordnung zur Betätigen einer Reibkupplung;

Fig. 2    eine Ausführungsform einer Fluidquelle für die Aktuatoranordnung der Fig. 1;

Fig. 3    eine alternative Fluidquelle für die Aktuatoranordnung der Fig. 1;

Fig. 4    ein regelungstechnisches Modell dritter Ordnung zur Verwendung bei einem Ansteuerverfahren der Reibkupplung;

Fig. 5    ein regelungstechnisches Modell vierter Ordnung zur Verwendung bei einem Verfahren zur Ansteuerung einer Reibkupplung; und

Fig. 6    eine schematische Darstellung eines Regelkreises für die Aktuatoranordnung.

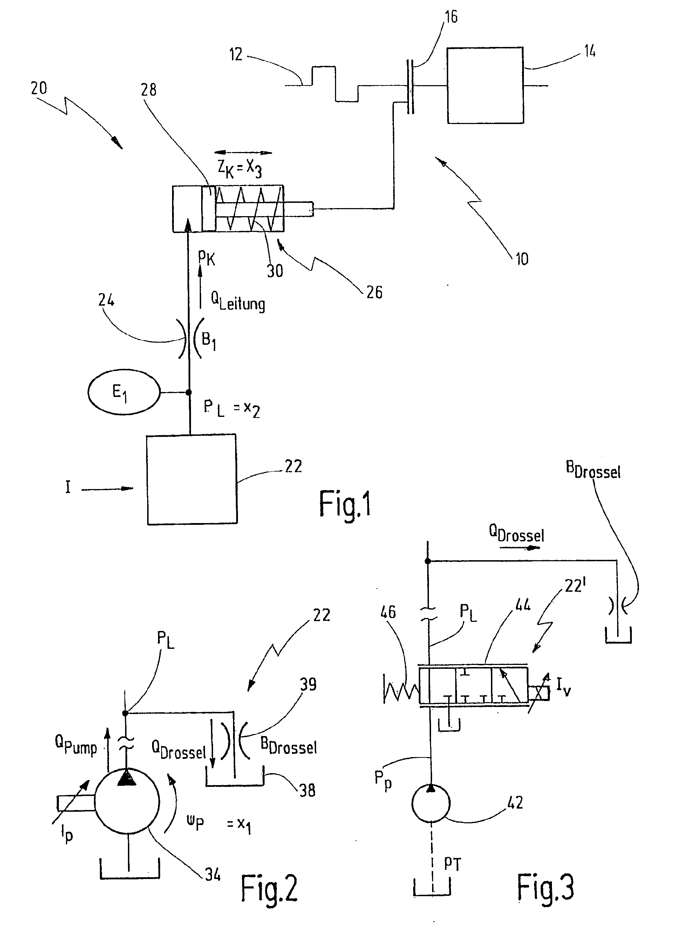

In Fig. 1 ist ein Antriebsstrang für ein Kraftfahrzeug schematisch dargestellt und generell mit 10 bezeichnet. Der Antriebsstrang 10 weist einen Antriebsmotor auf, bei dem es sich um einen Verbrennungsmotor, einen Hybridantrieb oder dergleichen handeln kann, und ein Getriebe 14, wie bspw. ein Stufengetriebe (z.B. ein ASG oder ein DKG oder auch ein Wandler-Automat). Zwischen dem Antriebsmotor 12 und dem Getriebe 14 ist eine Reibkupplung 16 angeordnet, die im vorliegenden Fall als Anfahr- und Trennkupplung ausgebildet ist. Im Falle eines Doppelkupplungsgetriebes kann der Antriebsstrang zwei derartige Reibkupplungen 16 beinhalten.

Die vorliegende Erfindung ist jedoch nicht auf die Verwendung in Verbindung mit Anfahr- und Trennkupplungen beschränkt, sondern kann bspw. auch auf andere Arten von Reibkupplungen und/oder -bremsen angewendet werden

Zur automatisierten Betätigung der Reibkupplung 16 ist eine hydraulische Aktuatoranordnung 20 vorgesehen. Die Aktuatoranordnung 20 weist eine Fluidquelle 22 auf, die elektrisch ansteuerbar ist, bspw. mittels eines elektrischen Stromes I. Die Fluidquelle 22 erzeugt an ihrem Ausgang einen Leitungsdruck $p_L$ und einen Volumenstrom $Q_{Leitung}$. Die Fluidquelle 22 ist über einen hydraulischen Leitungsabschnitt 24, der einen hydraulischen Widerstand B1 beinhaltet, mit einem hydraulischen Aktor 26 verbunden. Der hydraulische Aktor 26 ist im vorliegenden Fall eine einfach wirkende Kolben/Zylinderanordnung mit einem Kolben 28 und einer Rückstellfeder 30. Der Kolben 28 wird mit einem Kolbendruck $P_K$ beaufschlagt, der aufgrund des Leitungsabschnittes 24 im nicht-stationären Zustand in der Regel nicht identisch ist zu dem Leitungsdruck $p_L$. Zur Verbesserung der Regelbarkeit kann zwischen Fluidquelle 22 und Kupplung 16 ein Abfluss über eine Drossel und/oder eine Blende hin zu einem Tank erfolgen. Die Drossel oder Blende ist bevorzugt nahe zur Fluidquelle angeordnet, kann jedoch auch entfernt davon angeordnet sein.

Der Kolben 28 ist mit der Reibkupplung 16 gekoppelt und dazu ausgelegt, diese in Eingriff zu bringen, bspw. durch Andrücken von Lamellenpaketen oder Kupplungsscheiben. Die Reibkupplung 16 kann eine trockene Reibkupplung oder eine nasslaufende Reibkupplung wie eine Lamellenkupplung sein.

Bei $E_1$ ist schematisch das druckabhängige Elastizitätsmodul der Aktuatoranordnung 20 dargestellt.

Bei Ansteuerung der Reibkupplung wird auf den Weg $Z_K(X_3)$ des Kolbens 28 abgestellt. Dieser Weg entspricht der Position bzw. dem Weg der Reibkupplung 16. Die Aktuatoranordnung 20 wird mittels einer elektrischen Größe angesteuert, im vorliegenden Fall ein elektrischer Strom I. Wenn der Strom I erhöht wird, wird von der Fluidquelle 22 ein größerer Volumenstrom bereitgestellt , der zu einer Erhöhung des Leitungsvolumenstromes $Q_{Leitung}$ führt, was letztlich zu einer Erhöhung des Kolbendruckes $P_K$ und folglich zu einer Änderung der Position des Kolbens 28 führt. Dies wiederum führt zu einem Bewegen von Elementen der Reibkupplung 16. Sofern der Strom I verringert wird, sinkt der Kolbendruck $P_K$ und der Kolben 28 wird durch die Kraft der Rückstellfeder 30 zurückgefahren.

Im Betrieb der Reibkupplung 16 wird ein so genannter Eingriffspunkt bzw. Kisspoint eingestellt, der einem Wert des Kolbenweges $Z_K$ entspricht, bei dem die Reibkupplung 16 ein sehr kleines Drehmoment übertragen kann. Im drucklosen Zustand des Aktors 26 ist die Reibkupplung 16 vollständig geöffnet. Der Weg von der vollständig geöffneten Position der Reibkupplung bis hin zu dem Eingriffspunkt wird als "Füllen" der Reibkupplung 16 bezeichnet. Oberhalb des Eingriffspunktes erfolgt die Regelung der Übertragung des Drehmomentes der Reibkupplung 16, wobei in diesem Zustand der Bewegung des Kolbens 28 nicht nur die Kraft der Rückstellfeder 30 entgegenwirkt, sondern auch die innere Andruckkraft der Reibkupplung 16.

In Fig. 2 ist eine erste Ausführungsform einer Fluidquelle 22 dargestellt. Die Fluidquelle 22 der Fig. 2 weist eine elektromotorisch angetriebene Pumpe 34 auf, die Hydraulikfluid aus einem Tank ansaugt und einen Volumenstrom $Q_{pump}$ liefert. Der die Pumpe 34 antreibende elektrische Motor wird mittels eines elektrischen Stromes $I_B$ angetrieben. Die Drehzahl des elektrischen Motors ist mit $\omega_p(x_1)$ bezeichnet.

Zur Verbesserung der Regelbarkeit nach dem Erreichen des Eingriffspunktes (Kisspoint) wird ein Teil des von der Pumpe 34 gelieferten Volumenstromes $Q_{pump}$ über eine Drossel 36 in den Tank 38 abgeleitet. Die Drossel 36 weist einen hydraulischen Widerstand $B_{Drossel}$ auf. Durch die Drossel 36 fließt ein Volumenstrom $Q_{Drossel}$ Der Volumenstrom $Q_{Leitung}$ setzt sich folglich zusammen durch die Differenz von $Q_{Pump} - Q_{Drossel}$. Die Drossel kann auch an anderer Stelle zwischen Pumpe und Reibkupplung angeordnet sein, bspw. hinter dem hydraulischen Widerstand; in diesem Fall ist die obige Volumenbilanzgleichung entsprechend anzupassen.

In Fig. 3 ist eine alternative Ausführungsform einer Fluidquelle 22' dargestellt. Die Fluidquelle 22' weist eine Pumpe 42 auf, die an ihrem Ausgang einen Pumpendruck $P_p$ erzeugt. Ferner weist die Fluidquelle 22' ein elektrisch ansteuerbares Ventil 44 auf. Das Ventil 44 ist bspw. ein Wegeventil oder ein Proportionalventil und ist bspw. elektromagnetisch ansteuerbar, mittels eines Stromes $I_v$. Ein Ventilkolben kann dabei mittels einer Rückstellfeder 46 in eine in Fig. 3 gezeigte Grundposition vorgespannt sein.

Nachfolgend wird ein Verfahren zum Ansteuern der Aktuatoranordnung 20 und damit der Reibkupplung 16 beschrieben, das auf der Fluidpumpe 22 der Fig. 2 basiert. Eine entsprechende Anpassung der nachfolgend beschriebenen Algorithmen ist jedoch auch auf der Grundlage der Fluidquelle 22' der Fig. 3 möglich.

Bei der Ansteuerung bzw. Regelung der Aktuatoranordnung 20 und damit der Reibkupplung 16 sind die sich unmittelbar auf die Reibkupplung 16 auswirkenden Zustände des hydraulischen Aktors 26, nämlich der Kolbendruck $P_K$ und die Kolbenposition $Z_K$ nicht unmittelbar messbar. Anders herum ausgedrückt soll vorliegend ein Ansteuerverfahren entwickelt werden, bei dem es nicht notwendig ist, diese Zustände direkt zu messen.

Um dennoch eine genaue Ansteuerung zu ermöglichen, ist es notwendig, für die Aktuatoranordnung 20 Modellgleichungen zu entwickeln, die einen unmittelbaren Rückschluss auf die nicht messbaren Zustände ermöglichen. Vorliegend werden dabei die folgenden Zustände für die Modellentwicklung herangezogen:

a) Die Drehzahl des die Pumpe 34 antreibenden elektrischen Motors: $\omega(x_1)$

b) Der Druck des Fluides in der Leitung zwischen der Fluidquelle 22 und dem Leitungsabschnitt 24: $P_L$ (p_Leitung; $x_2$)

c) Die Position der Kupplung: $Z_K$ (pos_Kupp_m; $X_3$)

Für die Drehzahl $\omega$ lässt sich folgende Differentialgleichung gemäß dem Drallsatz aufstellen:

$$\frac{\delta}{\delta t}\omega(t) = \frac{Kt\ I\_Mot - T\_RD - Tq\_Pump}{J\_ges} \quad (1)$$

Die Reibungs- und Dämpfungskräfte können hierbei in einem gemeinsamen gemessenen Kennfeld zusammengefasst werden und aufgrund des Verhältnisses zwischen Dämpfung zu Widerstand und auch aufgrund des zunehmenden Widerstands bei Erhöhung der Drehzahl der Pumpe vernachlässigt werden, was stabilisierend wirkt. Als Zustandsgleichung ergibt sich folglich

$$\frac{\delta}{\delta t}\omega(t) = \frac{Kt\ I\_Mot - Tq\_Pump}{J\_ges} \qquad (2)$$

wobei

Kt Drehmomentkonstante des elektrischen Motors

I_Mot Motorstrom = $I_p$

$T_q$_Pump (=$T_q$) Widerstandsmoment der Pumpe

J_ges gesamte Trägheit, die an den Motor angekoppelt ist

Das Widerstandsmoment $T_q$_Pump ergibt sich bei einer Pumpe der angesprochenen Art durch ein Widerstandskennfeld, wie oben erwähnt. Dieses wird im vorliegenden Fall vorzugsweise auf eine Kennlinie reduziert, wobei vorzugsweise nur ein bestimmter Abschnitt der Kennlinie betrachtet wird. Ein derartiger Abschnitt lässt sich dann ohne großen Verlust an Genauigkeit linearisieren, so dass sich das Widerstandsmoment darstellen lässt mit

$$T_q\_Pump := ctq1\ \omega + ctq2 \qquad (3)$$

wobei

*ctq1*    Gleichungssteigung

*ctq2*    Widerstandsmoment bei Drehzahl $\omega=0$

Für den Leitungsdruck $P_{Leitung}$ lässt sich folgende Differentialgleichung aufstellen:

$$\frac{\delta}{\delta t}p\_Leitung(t) = \frac{Q\_Pump - Q\_Drossel - Q\_Leitung}{E1} \qquad (4)$$

Die Position des Kolbens und damit der Kupplung wird durch Integration der Geschwindigkeit errechnet. Die Geschwindigkeit selbst wird nicht durch Integration sondern durch den Zusammenhang gemäß nachstehender Gleichung (5) berechnet. Dies hat den Vorteil, dass die Frequenz zur Berechnung der Geschwindigkeit auch im Bereich über den Eingriffspunkt hinaus nicht zu groß wird. Folglich ist eine ganzheitliche Ansteuerung der Reibkupplung über den Eingriffspunkt hinaus möglich.

Unter der Annahme, dass sich die Geschwindigkeit der Kupplung v_Kupp durch den Quotienten des Volumenstromes in der Leitung Q_Leitung und der hydraulischen Wirkfläche des Kolbens, und unter der weiteren Annahme, dass sich der Volumenstrom in der Leitung Q_Leitung ergibt zu B_Leitung (p_Leitung-p_Kupplung), und unter der weiteren Annahme, dass sich der Druck p_Kupplung ergibt durch den Quotienten der vom Kupplungsweg abhängigen Federkraft F_Fed($x_3$) und der Fläche des Kolbens A_Kupp, lässt sich folgende Zustandsgleichung aufstellen

$$v\_Kupp := \frac{B\_Leitung\left(x_2 \dfrac{F\_Fed(x_3)}{A\_Kupp}\right)}{A\_Kupp} \qquad (5)$$

wobei

*v_Kupp:*    Geschwindigkeit des Kolbens 28

| | |
|---|---|
| *B_Leitung:* | hydraulischer Widerstand $B_1$ des Leitungsabschnittes 24 |
| *F_Fed($x_3$):* | Rückstellkraft des Kolbens, die von der Kolbenposition abhängt und die Federkonstante der Rückstellfeder 30 als auch Rückstellkräfte durch den Reibpaarungskontakt der Reibkupplung beinhaltet |
| *A_Kupp:* | wirksame hydraulische Fläche des Kolbens 28 |

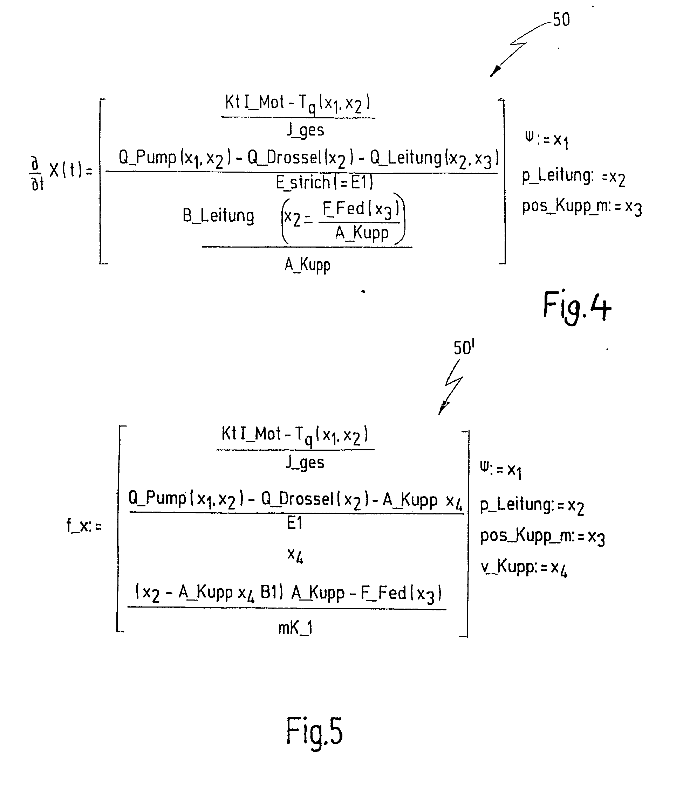

Auf der Grundlage der obigen Differentialgleichungen lässt sich ein Modell 50 der Aktuatoranordnung 20 darstellen, wie es in Fig. 4 gezeigt ist. Das gewählte Modell für die Aktuatoranordnung 20 hat den Vorteil, dass die Kupplungsposition $X_3$ als flacher Ausgang des Modells existiert.

Mit anderen Worten lassen sich alle Zustands- und Eingangsgrößen anhand dieses flachen Ausgangs und einer endlichen Zahl seiner Zeitableitungen vollständig beschreiben. Als Eingang des Modells gilt dabei der Motorstrom I_Mot.

Das oben beschriebene und in Fig. 4 bei 50 bezeichnete Modell ist zudem invertierbar. Der Ausgang des inversen Modells ist folglich der Motorstrom $I_p$(I_Mot).

In das invertierte Modell werden Soll-Trajektorien eingegeben. Die Soll-Trajektorien werden berechnet auf der Grundlage der Vorgabe einer übergeordneten Steuerung, die bspw. vorgibt, dass eine bestimmte Kupplungsposition innerhalb einer bestimmten Zeit zu erreichen ist. Die Soll-Trajektorien beschreiben folglich den Sollwert-Verlauf der Systemzustände und entstehen durch Differentiation aus dem Verlauf der Sollposition. Dieser Verlauf muss wenigstens dreimal stetig differenzierbar sein, da es sich bei dem Modell 50 um ein Modell dritter Ordnung handelt.

Derartige Soll-Trajektorien lassen sich folglich durch ein Polynom entsprechender Ordnung oder durch ein Filter entsprechender Ordnung darstellen. Soll ein Polynom benutzt und die Anfangs- und Endwerte der einzelnen Zustände mit berücksichtigt werden, erhöht sich die Ordnung des Polynoms auf sieben. Dabei ist die Dynamik so zu wählen, dass die sich aus dem inversen Modell ergebende Stellgröße innerhalb vorgegebener Beschränkungen liegt ($0<I<I_{max}$).

Alternativ hierzu lässt sich für die Aktuatoranordnung ein Modell 50' entwickeln, das als Modell vierter Ordnung ausgebildet ist. Hierbei ist neben den drei Zuständen des Modells 50 der Fig. 4 ein vierter Zustand mit aufgenommen, der die Geschwindigkeit der Kupplung darstellt (v_Kupp; $X_4$).

In dem Modell 50' der Fig. 5 sind im Wesentlichen die gleichen Parameter genannt wie in dem Modell 50 der Fig. 4, wobei Q_pump ($X_1$ $X_2$) der Volumentstrom der Pumpe ist, der von der Drehzahl des Pumpenmotors und dem Druck in der Leitung abhängt, und wobei E1=E_Strich (Ersatzkompressionsmodul), c0, c1 Federkonstanten der Rückstellkraft der Feder(n) im Bereich vor bzw. über dem Eingriffspunkt, mK_1 Masse des Kupplungskolbens

Bei dem Modell 50' handelt es sich um ein Modell vierter Ordnung, so dass der Verlauf der Sollposition viermal stetig differenzierbar sein muss, um die Soll-Trajektorien zu bestimmen. Hieraus ergibt sich für die Soll-Trajektorien ein Lösungspolynom neunter Ordnung.

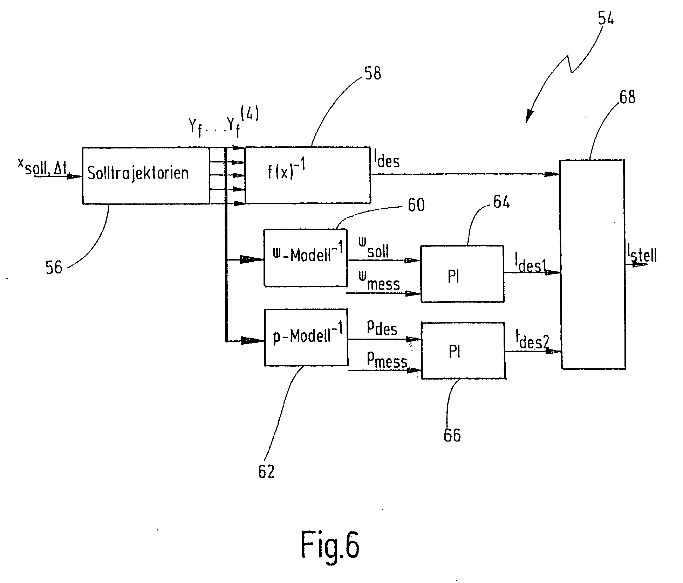

In Fig. 6 ist in schematischer Form ein Regelkreis 54 dargestellt. Der Regelkreis 54 beinhaltet ein Modul 56 zur Bestimmung der Soll-Trajektorien, wobei die Anzahl der Ableitungen vorliegend mit vier angegeben ist, jedoch auch drei sein kann. Bei 58 ist ein inverses Modell des Modells 50 (oder 50') gezeigt, in das die Soll-Trajektorien eingegeben werden und das als Ausgang $I_{des}$ einen Vorsteuerungswert für den Pumpenmotorstrom I aufweist. Mit anderen Worten wird das inverse Modell 58 zur Vorsteuerung verwendet.

Bei 60 ist ein Teilmodell des inversen Modells 58 gezeigt, mittels dessen aus den Soll-Trajektorien sich ein Sollwert für die Pumpendrehzahl ermitteln lässt ($\omega_{soll}$)- In einem ersten Regler 64, der als PI-Regler ausgebildet sein kann, wird dieser Modell-Sollwert mit einem gemessenen Istwert der Pumpenmotordrehzahl $\omega_{mess}$ verglichen und hieraus eine erste Stellgröße $I_{des1}$ errechnet.

In entsprechender Weise wird ein zweites Teilmodell 62 des inversen Modells 58 dazu verwendet, um eine Sollgröße für den Leitungsdruck zu ermitteln ($p_{des}$). Diese Modell-Sollgröße und ein gemessener Istwert des Leitungsdruckes ($P_{mess}$) werden in einen zweiten Regler 66 eingegeben, der hieraus eine zweite Stellgröße $I_{des2}$ erzeugt.

In einem Summenmodul werden die Stellgröße $I_{des}$ der Vorsteuerung sowie die Stellgrößen $I_{des1}$ und $I_{des2}$ aufsummiert zu einem Gesamtstellwert $I_{Stell}$, der dem Pumpenmotoransteuerstrom $I_p$ eingegeben wird. Ggf. kann sich an das Summenmodul 68 noch ein Stromregelkreis anschließen, der dem Regelkreis 54 unterlagert ist.

## Patentansprüche

1.  Verfahren zur Ansteuerung einer Reibkupplung (16), insbesondere für einen Kraftfahrzeugantriebsstrang (10), wobei die Reibkupplung (16) mit einem Kupplungsdruck ($p_K$) beaufschlagt wird, der von einer hydraulischen Aktuatoranordnung (20) erzeugt wird, die eine elektrisch ansteuerbare Fluidquelle (22) und einen hydraulischen Aktor (26) aufweist, dessen Zustand durch einen Aktor-Istwert ($x_I$) charakterisiert ist, der mit dem Kupplungsdruck ($p_K$) in Zusammenhang steht, wobei das Verfahren die Schritte aufweist:

- Bilden eines regelungstechnischen Modells (50) der Aktuatoranordnung (20), das zumindest eine Fluidquellen-Stellgröße (I) als Eingang und zumindest den Aktor-Istwert ($x_I$) als flachen Ausgang aufweist und das invertierbar ist;
- Bilden eines inversen Modells (58) der Aktuatoranordnung (20);
- Eingeben eines Aktor-Sollwertes (xs) in das inverse Modell (58), um eine Modell-Stellgröße zu ermitteln;

**dadurch gekennzeichnet dass** das Verfahren die zusätzlichen Schritten aufweist:

- Verwenden von zumindest einem Teil (60) des inversen Modells (58), um aus dem Aktor-Sollwert ($x_S$) die Modell-Stellgröße ($I_{des}$) oder eine damit gekoppelte Koppelgröße ($\omega_{soll}$) der Fluidquelle (22) zu ermitteln und einem ersten Regler (64) einzugeben, der hieraus und aus einer entsprechenden gemessenen Istgröße ($\omega_{mess}$) eine erste Fluidquellen-Stellgröße ($I_{des1}$) erzeugt und Verwenden von zumindest einem Teil (62) des inversen Modells (58), um aus dem Aktor-Sollwert ($x_S$) einen Modell-Kupplungsdruck ($p_{des}$) zu ermitteln und einem zweiten Regler einzugeben, der hieraus und aus einer entsprechenden gemessenen Druck-Istgröße ($p_{mess}$) eine zweite Fluidquellen-Stellgröße ($I_{des2}$) erzeugt; und
- Aufsummieren der Modell-Stellgröße ($I_{des}$), der ersten Fluidquellen-Stellgröße ($I_{des1}$) und der zweiten Fluidquellen-Stellgröße ($I_{des2}$) zu einem Gesamtstellwert ($I_{Stell}$), der zur Ansteuerung der Fluidquelle (22) verwendet wird.

2. Verfahren nach Anspruch 1, wobei der Aktor-Istwert eine Aktor-Istposition ($x_I$) ist und wobei der Aktor-Sollwert eine Aktor-Sollposition ($x_S$) ist.

3. Verfahren nach Anspruch 1 oder 2, wobei die Modell-Stellgröße ($I_{des}$) zur Vorsteuerung verwendet wird.

4. Verfahren nach einem der Ansprüche 1 - 3, wobei die elektrisch ansteuerbare Fluidquelle (22) eine mittels eines elektrischen Motors gesteuerte Pumpe (34) ist, deren Fluidquellen-Stellgröße der Motorstrom ($I_P$) ist.

5. Verfahren nach einem der Ansprüche 1 - 3, wobei die elektrisch ansteuerbare Fluidquelle (22') ein elektrisch gesteuertes Ventil (44) aufweist, dessen Fluidquellen-Stellgröße der Ventilstrom Iv ist.

6. Verfahren nach einem der Ansprüche 1 - 5, wobei eine gemessene Druck-Istgröße ($p_{mess}$) ein Leitungsdruck ($p_L$) an einem Messort zwischen der Fluidquelle (22) und einem hydraulischen Widerstand (24) zwischen der Fluidquelle (22) und dem Aktor (26) ist.

7. Verfahren nach einem der Ansprüche 1 - 6, wobei das regelungstechnische Modell (50') als Modell 4. Ordnung mit vier Zustandgleichungen realisiert ist, die auf vier Zustandgrößen basieren.

8. Verfahren nach Anspruch 7, wobei die vier Zustandsgrößen eine Koppelgröße ($\omega x_1$) der Fluidquelle (22), den Kupplungsdruck ($P; x_2$), einen Aktorwert ($x_3$) und eine Ableitung ($x_4$) des Aktorwertes beinhalten.

9. Verfahren nach einem der Ansprüche 1 - 6, wobei das regelungstechnische Modell (50) als Modell 3. Ordnung mit drei Zustandgleichungen realisiert ist, die auf drei Zustandgrößen basieren.

10. Verfahren nach Anspruch 9, wobei die drei Zustandsgrößen eine Koppelgröße ($\omega, x_1$) der Fluidquelle (22), den Kupplungsdruck ($P; x_2$) und einen Aktorwert $x_3$ beinhalten.

11. Verfahren nach einem der Ansprüche 8 - 10, wobei der Aktorwert eine Aktorposition ($x_3$) ist.

12. Verfahren nach einem der Ansprüche 7 - 11, wobei die elektrisch ansteuerbare Fluidquelle (22) eine mittels eines elektrischen Motors gesteuerte Pumpe (34) aufweist, deren Fluidquellen-Stellgröße der Motorstrom ($I_P$) ist, und wobei wenigstens eine der Zustandsgleichungen auf einem linearisierten Abschnitt einer Kennlinie basiert, die aus einem Widerstandskennfeld der Pumpe ermittelt wird.

**Claims**

1. Method for actuating a friction clutch (16), in particular for a motor vehicle drivetrain (10), the friction clutch (16) being acted on with a clutch pressure ($p_K$) generated by a hydraulic actuator arrangement (20) which has an electrically actuable fluid source (22) and which has a hydraulic actuator (26) whose state is **characterized by** an actuator actual value ($x_I$) which is related to the clutch pressure ($p_K$), the method having the steps:

- forming a regulation-oriented model (50) of the actuator arrangement (20), which model has at least one fluid source actuating variable (I) as an input and at least the actuator actual value ($x_I$) as a flat output and which model can be inverted;
- forming an inverse model (58) of the actuator arrangement (20); and
- inputting an actuator nominal value ($x_S$) into the inverse model (58) in order to determine a model actuating variable;

**characterized in that** the method includes the additional steps:

- using at least a part (60) of the inverse model (58) to determine from the actuator nominal value ($x_S$) the model actuating variable ($I_{des}$), or a coupling variable ($\omega_{soll}$) which is coupled thereto, of the fluid source (22) and to input said variable into a first regulator (64) which from this and from a corresponding measured actual variable ($\omega_{mess}$) generates a first fluid source actuating variable ($I_{des1}$), and using at least a part (62) of the inverse model (58) to determine from the actuator nominal value ($x_s$) a model clutch pressure ($p_{des}$) and to input the latter into a second regulator which from this and from a corresponding measured actual pressure variable ($p_{mess}$) generates a second fluid source actuating variable ($I_{des2}$); and
- adding up the model actuating variable ($I_{des}$), the first fluid source actuating variable ($I_{des1}$) and the second fluid source actuating variable ($I_{des2}$) to a total actuating value which is used for actuating the fluid source (22).

2. Method according to Claim 1, the actuator actual value being an actuator actual position ($x_I$), and the actuator nominal value being an actuator nominal position ($x_S$).

3. Method according to Claim 1 or 2, the model actuating variable ($I_{des}$) being used for pilot control.

4. Method according to one of Claims 1-3, the electrically actuable fluid source (22) being a pump (34) which is controlled by means of an electric motor and whose fluid source actuating variable is the motor current ($I_P$).

5. Method according to one of Claims 1-3, the electrically actuable fluid source (22') comprising an electrically controlled valve (44) whose fluid source actuating variable is the valve current ($I_v$).

6. Method according to one of Claims 1-5, a measured actual pressure variable ($p_{mess}$) being a line pressure ($p_L$) at a measurement location between the fluid source (22) and a hydraulic resistance (24) between the fluid source (22) and the actuator (26).

7. Method according to one of Claims 1-6, the regulation-oriented model (50') being realized as a 4th order model with four state equations based on four state variables.

8. Method according to Claim 7, the four state variables being a coupling variable ($\omega$, $x_1$) of the fluid source (22), the clutch pressure ($p$; $x_2$), an actuator value ($x_3$) and a derivative ($x_4$) of the actuator value.

9. Method according to one of Claims 1-6, the regulation-oriented model (50) being realized as a 3rd order model with three state equations based on three state variables.

10. Method according to Claim 9, the three state variables comprising a coupling variable ($\omega$, $x_1$) of the fluid source (22), the clutch pressure ($p$; $x_2$) and an actuator value ($x_3$).

11. Method according to one of Claims 8-10, the actuator value being an actuator position ($x_3$).

12. Method according to one of Claims 7-11, the electrically actuable fluid source (22) having a pump (34) which is controlled by means of an electric motor and whose fluid source actuating variable is the motor current ($I_P$), and at least one of the state equations being based on a linearized section of a characteristic curve determined from a resistance characteristic map of the pump.

**Revendications**

1. Procédé de commande d'un embrayage à friction (16), notamment pour une chaîne cinématique de véhicule automobile (10), l'embrayage à friction (16) étant alimenté avec une pression d'embrayage ($p_K$) produite par un agencement d'actionneur hydraulique (20) comportant une source de fluide (22) pouvant être commandée par voie électrique et un actionneur hydraulique (26) dont l'état est **caractérisé par** une valeur réelle d'actionneur ($x_I$) associée à la pression d'embrayage ($p_K$), le procédé présentant les étapes suivantes :

   formation d'un modèle technique de régulation (50) de l'agencement d'actionneur (20),
   l'au moins une variable de réglage de source de fluide (I) servant d'entrée et au moins la valeur réelle d'actionneur ($x_I$) servant de sortie plate et ceci étant inversable ;
   formation d'un modèle inverse (58) de l'agencement d'actionneur (20) ;
   saisie d'une valeur théorique d'actionneur ($x_S$) dans le modèle inverse (58) pour calculer une variable de réglage de modèle ;
   **caractérisé en ce que** le procédé présente les étapes supplémentaires suivantes :

   utilisation d'au moins une partie (60) du modèle inverse (58) pour calculer à partir de la valeur théorique d'actionneur ($x_S$) la variable de réglage de modèle ($I_{des}$) ou une grandeur de couplage ($\omega_{soll}$) y étant couplé de la source de fluide (22) et pour l'envoyer à un premier régulateur (64) qui produit à partir de celle-ci et d'une grandeur réelle ($\omega_{mess}$) mesurée correspondante une première variable de réglage de source de fluide ($I_{des1}$) et utilisation d'au moins une partie (62) du modèle inverse (58) pour calculer à partir de la valeur théorique d'actionneur ($x_S$) une pression d'embrayage modèle ($p_{des}$) et l'envoyer à un deuxième régulateur qui produit à partir de celle-ci et d'une grandeur réelle de pression ($p_{mess}$) mesurée correspondante une deuxième variable réglage de la source de fluide ($I_{des2}$) et
   addition de la variable de réglage de modèle ($I_{des}$), de la première variable de réglage de source de fluide ($I_{des1}$) et de la deuxième variable de réglage de source de fluide ($I_{des2}$) pour constituer une valeur de réglage totale ($I_{Stell}$) utilisée pour commander la source de fluide (22).

2. Procédé selon la revendication 1, la valeur réelle d'actionneur étant une position réelle d'actionneur ($x_I$) et la valeur théorique d'actionneur étant une position théorique d'actionneur ($x_S$).

3. Procédé selon la revendication 1 ou 2, la variable de réglage de modèle ($I_{des}$) étant utilisée pour la précommande.

4. Procédé selon l'une quelconque des revendications 1 à 3, la source de fluide (22) pouvant être commandée par voie électrique étant une pompe (34) commandée à l'aide d'un moteur électrique dont la variable de réglage de source de fluide est le courant moteur ($I_P$).

5. Procédé selon l'une quelconque des revendications 1 à 3, la source de fluide (22') pouvant être commandée par voie électrique comportant une soupape (44) commandée par voie électrique dont la variable de réglage de source de fluide est le débit de soupape Iv.

6. Procédé selon l'une quelconque des revendications 1 à 5, une grandeur réelle de pression ($p_{mess}$) mesurée étant une pression de conduite ($p_L$) mesurée à un point de mesure placé entre la source de fluide (22) et une résistance hydraulique (24) prévue entre la source de fluide (22) et l'actionneur (26).

7. Procédé selon l'une quelconque des revendications 1 à 6, le modèle technique de régulation (50') prenant la forme d'un modèle de 4$^{ème}$ ordre avec quatre équations d'état basées sur quatre grandeurs d'état.

8. Procédé selon la revendication 7, les quatre grandeurs d'état contenant une grandeur de couplage ($\omega x_1$) de la source de fluide (22), la pression d'embrayage ($P ; x_2$), une valeur d'actionneur ($x_3$) et une dérivée ($x_4$) de la valeur d'actionneur.

9. Procédé selon l'une quelconque des revendications 1 à 6, le modèle technique de régulation (50) prenant la forme d'un modèle de 3$^{ème}$ ordre avec trois équations d'état basées sur trois grandeurs d'état.

10. Procédé selon la revendication 9, les trois grandeurs d'état contenant une grandeur de couplage ($\omega, x_1$) de la source de fluide (22), la pression d'embrayage ($P ; x_2$) et une valeur d'actionneur $x_3$.

**11.** Procédé selon l'une quelconque des revendications 8 à 10, la valeur d'actionneur étant une position d'actionneur ($x_3$).

**12.** Procédé selon l'une quelconque des revendications 7 à 11, la source de fluide (22) pouvant être commandée par voie électrique comportant une pompe (34) commandée par le biais d'un moteur électrique dont la variable de réglage de source de fluide est le courant moteur ($I_P$) et au moins une des équations d'état se basant sur une section linéarisée d'une courbe caractéristique calculée à partir d'une caractéristique de résistance de la pompe.

Fig.1

Fig.2

Fig.3

$$\frac{\partial}{\partial t} X(t) = \begin{bmatrix} \dfrac{Kt\,I\_Mot - T_q(x_1, x_2)}{J\_ges} \\[6pt] \dfrac{Q\_Pump(x_1, x_2) - Q\_Drossel(x_2) - Q\_Leitung(x_2, x_3)}{E\_strich(=E1)} \\[6pt] \dfrac{B\_Leitung \left(x_2 - \dfrac{F\_Fed(x_3)}{A\_Kupp}\right)}{A\_Kupp} \end{bmatrix}$$

$\Psi := x_1$

$p\_Leitung := x_2$

$pos\_Kupp\_m := x_3$

Fig.4

$$f\_x := \begin{bmatrix} \dfrac{Kt\,I\_Mot - T_q(x_1, x_2)}{J\_ges} \\[6pt] \dfrac{Q\_Pump(x_1, x_2) - Q\_Drossel(x_2) - A\_Kupp\; x_4}{E1} \\[6pt] x_4 \\[6pt] \dfrac{(x_2 - A\_Kupp\; x_4\; B1)\; A\_Kupp - F\_Fed(x_3)}{mK\_1} \end{bmatrix}$$

$\Psi := x_1$

$p\_Leitung := x_2$

$pos\_Kupp\_m := x_3$

$v\_Kupp := x_4$

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 108009094 B4
- DE 10046106 C1
- DE 10137581 C1

**In der Beschreibung aufgeführte Nicht-Patentliteratur**

- Flatness-based clutch control for automated manual transmissions. *Control Engineering Practice,* 01. Dezember 2003, vol. 11 (12), 1353-1359